(19) Europäisches Patentamt
European Patent Office
Office européen des brevets

(11) EP 3 959 247 B1

# (12) FASCICULE DE BREVET EUROPEEN

(45) Date de publication et mention de la délivrance du brevet:
**19.04.2023 Bulletin 2023/16**

(21) Numéro de dépôt: **20719477.0**

(22) Date de dépôt: **23.04.2020**

(51) Classification Internationale des Brevets (IPC):
***C08F 222/10*** $^{(2006.01)}$ ***C09D 4/00*** $^{(2006.01)}$
***B33Y 70/00*** $^{(2020.01)}$ ***G02B 1/04*** $^{(2006.01)}$

(52) Classification Coopérative des Brevets (CPC):
(C-Sets disponibles)
**C08F 222/1045; B33Y 70/00; C09D 4/00; G02B 1/04;** B29C 64/129 (Cont.)

(86) Numéro de dépôt international:
**PCT/EP2020/061344**

(87) Numéro de publication internationale:
**WO 2020/216851 (29.10.2020 Gazette 2020/44)**

## (54) COMPOSITIONS RÉTICULABLES AYANT UNE FAIBLE VISCOSITÉ POUR REVÊTEMENTS ET MATÉRIAUX À HAUT INDICE DE RÉFRACTION ET À TEMPÉRATURE DE DÉFLEXION THERMIQUE ÉLEVÉE

NIEDRIGVISKOSE VERNETZBARE ZUSAMMENSETZUNGEN FÜR BESCHICHTUNGEN UND MATERIALIEN MIT HOHEM BRECHUNGSINDEX UND HOHER THERMISCHER VERFORMUNGSTEMPERATUR

LOW VISCOSITY CROSSLINKABLE COMPOSITIONS FOR COATINGS AND MATERIALS WITH A HIGH REFRACTIVE INDEX AND HIGH THERMAL DEFLECTION TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2019 FR 1904426**

(43) Date de publication de la demande:
**02.03.2022 Bulletin 2022/09**

(73) Titulaire: **ARKEMA FRANCE**
**92700 Colombes (FR)**

(72) Inventeur: **MONNIER, Guillaume**
**60550 VERNEUIL EN HALATTE (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A1- 2 664 635**
**US-A1- 2012 145 971**
**US-A1- 2015 057 422**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08F 222/1045, C08F 220/301, C08F 220/20, C08F 220/301;**
**C09D 4/00, C08F 222/1045;**
**G02B 1/041, C08L 33/08;**
**G02B 1/041, C08L 33/10;**
**G02B 1/041, C08L 33/10, C08L 45/00**

## Description

La présente invention concerne une composition (formulation) réticulable, en particulier photoréticulable, ayant une faible viscosité à l'application qui convient pour la réalisation de revêtements ou de matériaux 3D à haut indice de réfraction (IR) et à haute température de déflexion thermique (HDT), en particulier convenable pour la fabrication d'objets imprimés 3D, plus particulièrement pour applications optiques.

Il existe déjà des formulations réticulables et en particulier photoréticulables pour objets optiques mais celles-ci ne conviennent pas pour la fabrication d'objets optiques par impression 3D, laquelle requiert des propriétés physico-chimiques particulières. Il existe également des formulations photoréticulables pour impression 3D mais qui ne conviennent pas pour des applications optiques ou ne satisfont pas les performances requises pour des applications optiques. Il y a donc un besoin de nouvelles compositions pour applications optiques qui peuvent être imprimées en 3D pour la réalisation d'objets (articles) tridimensionnels. Parmi les performances requises pour l'impression 3D d'objets optiques, les compositions réticulables de la présente invention doivent satisfaire au moins aux critères importants suivants non remplis par celles connues de l'état de la technique :

- viscosité à l'utilisation (25°C étant prise comme température de référence) inférieure à 5000 mPa.s, de préférence inférieure à 3000 mPa.s, plus préférentiellement inférieure à 2500 mPa.s,
- une température de déflexion thermique (HDT) selon la méthode ISO 075 (2004) après réticulation, d'au moins 70°C et de préférence d'au moins 80°C,
- un indice de réfraction (IR) avant réticulation selon la norme ASTM D1218 - 12(2016) d'au moins 1,47, de préférence supérieur à 1,52 et plus particulièrement supérieur à 1,56 et après réticulation d'au moins 1,50, de préférence supérieur à 1,55 et plus particulièrement d'au moins 1,57.

Plus particulièrement, les formulations réticulées doivent avoir un module de Young à 25°C selon la méthode ISO 527 (1993) d'au moins 2500 MPa, de préférence d'au moins 3000 MPa.

EP 2 586 802 B1 décrit une composition réticulable sous rayonnement par voie radicalaire convenable pour des lentilles à haut indice de réfraction et comprenant comme composants essentiels un phényl benzyl (méth)acrylate et un uréthane (méth)acrylate aromatique. La présence d'aucun tetra(méth)acrylate de diglycidyle éther de bisphénol fluorène n'est ni décrite ni suggérée par ce document.

EP 2 664 635 B1 concerne le même domaine d'application que le document cité ci-avant et décrit une composition réticulable sous rayonnement par voie radicalaire convenable pour lentilles à haut indice de réfraction et comprenant comme composants essentiels du phényl benzyl (méth)acrylate avec un ratio limité entre isomères o- et p- du benzyl phényl (méth)acrylates, comprenant en outre un époxy (méth)acrylate de structure aromatique. La présence de tetra(méth)acrylate de diglycidyle éther de bisphénol fluorène n'est ni décrite ni suggérée non plus par ce document.

EP 2 684 903 B1 décrit des compositions similaires pour le même usage avec présence d'un composant phényl benzyl (méth)acrylate avec un ratio spécifique entre isomères o- et p- et la présence d'un deuxième composant (méth)acrylate comprenant dans sa structure des biphényles liés par un méthylène, ladite composition ne comprenant pas d'uréthane (méth)acrylate. La présence de tétra(méth)acrylate de diglicydyle éther de bisphénol fluorène n'est pas non plus décrite ni suggérée par ce document.

Le 1^er^ objet de l'invention concerne donc une composition réticulable comprenant deux composants essentiels a) et b) comme définis ci-dessous et en option d'autres composants c), d) et e), comme définis ci-dessous.

La composition réticulée fait également partie de l'invention comme le produit fini résultant de la réticulation de ladite composition ou comprenant ladite composition réticulée.

Un autre objet de l'invention concerne l'utilisation de ladite composition pour la réalisation de revêtements et de matériaux à haut IR et haute HDT.

Le premier objet de l'invention concerne donc une composition (aussi appelée formulation pour cette invention) réticulable qui comprend :

a) au moins un oligomère tétra(méth)acrylate de diglycidyle éther de biphénol fluorène
b) au moins un diluant parmi les mono(méth)acrylates d'un monoalcool comprenant une structure biphényle, cumyle ou benzyle,
c) en option, au moins un oligomère (méth)acrylate de fonctionnalité en (méth)acrylates d'au moins 2 choisi parmi uréthanes (méth)acrylates ou thiocarbamates (méth)acrylates
d) en option, au moins un monomère ester (méth)acrylate de fonctionnalité allant de 1 à 6 différent de b),
e) en option, au moins un oligomère parmi polyester (méth)acrylate, polyéther (méth)acrylate ou époxy (méth)acrylates de fonctionnalité allant de 1 à 15. Concernant les composants optionnels c) à e), ils peuvent être présents dans ladite composition soit chacun seul en combinaison avec les composants a) et b) tels que définis ci-haut, soit en combinaison avec un ou plusieurs autres composants parmi les composants c) à e).

Le taux en poids de chaque composant a) à e) peut être défini par rapport au poids des composants a) + b). Ce taux en poids peut être converti en % en poids par rapport au poids total de la composition. Par exemple, si le % en poids du composant c) par rapport à a) + b) dans une composition a) + b) + c) est égal à x, dans ce cas le % en poids X par rapport au poids total de la composition a) + b) + c) peut être calculé selon la formule suivante :

$$X = 100\,x / (100 + x)$$

La somme des % en poids ainsi calculés des composants présents a) et b) et en option de c) à e) par rapport au poids total de la composition doit être égale à 100%.

Par exemple, si le taux en poids de a) par rapport au poids de a) + b) est de 60% et le taux de en poids de c) dans une composition a) + b) + c) par rapport à a) + b) est défini comme étant de 30%, dans ce cas le % en poids de c) par rapport au poids de a) + b) + c) sera de 100.30 / (100 + 30) = 3000/130 = 23,08% avec % de a) = 60. 100 / 100 + 30 = 46,15% et le % de b) (complément de a) dans 100 parties de a) + b) est de 40% vs a) + b)) est de 40.100 / 130 = 30,77% avec somme de % a) + b) + c) = 23,08 + 46,15 + 30,77 = 100%.

Le tétra(méth)acrylate du diglycidyl éther de bisphénol fluorène comme composant a), peut être préparé par estérification du diglycidyl éther de bisphénol fluorène (DGBF) soit avec l'acide (méth)acrylique en deux étapes soit en une étape avec l'anhydride (méth)acrylique avec d'abord réaction des groupements époxydes par ouverture du cycle oxirane, avec formation d'un premier groupement ester (méth)acrylique et d'un groupement hydroxyle secondaire, lequel après (méth)acrylation complète (vs OH secondaire) conduit au composant tétra(méth)acrylé de DGBF. Des conditions détaillées similaires sont décrites pour la (méth)acrylation par l'anhydride (méth)acrylique d'un DGEBA (diglycidyl éther de bisphénol A) pour préparer le tétra(méth)acrylate de DGEBA dans US 6,515,166 et peuvent donc être appliquées au dérivé DGBF.

Plus particulièrement, le composant a) est le tétra(méth)acrylate de diglycidyle éther de bisphénol fluorène selon formule suivante (I) :

[Chem 1]

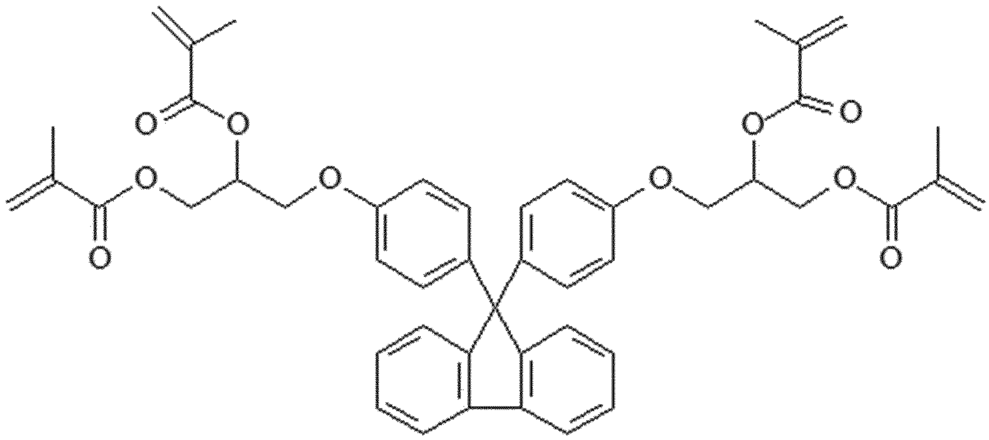

(I)

ou le tetraacrylate de diglycidyle éther de bisphénol fluorène, de même formule (I) sauf que le groupement méthyle du méthacrylate est absent (tous groupements méthacrylates remplacés par groupements acrylates).

La méthacrylation complète signifie la méthacrylation complète du groupement glycidyle terminal, à la fois du groupement oxirane (époxy) dudit glycidyle et aussi du groupement hydroxyle secondaire formé après l'ouverture dudit cycle oxirane.

Concernant le composant b), il peut être préparé par (méth)acrylation par l'acide (méth)acrylique ou par l'anhydride (méth)acrylique d'un monoalcool comprenant une structure biphényle ou cumyle ou benzyle. Le monoalcool peut éventuellement être un dérivé alkoxylé, notamment éthoxylé et/ou propoxylé. Comme exemple de monoalcool pouvant être (méth)acrylé pour obtenir le mono (méth)acrylate tel que défini selon b), on peut citer le biphényl-4-méthanol, le biphényl-2-ol, le biphényl-2-ol éthoxylé (1 ou 2 unités éthoxy), le 4-cumyl phénol, le 4-cumyl phénol éthoxylé (1 ou 2 unités éthoxy) ou l'alcool benzylique.

Plus particulièrement, ledit composant b) est le mono(méth)acrylate de biphényl-4-méthanol de formule suivante (II) :

[Chem 2]

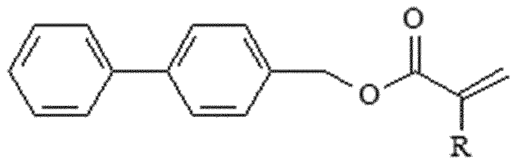

(II)

avec R étant méthyle ou H, de préférence H.

Il est préparé par la (méth)acrylation du biphényl-4-méthanol.

Selon un mode de réalisation, ledit composant b) correspond à un mono(méth)acrylate de biphényl-2-ol éthoxylé de formule (III) ou (IV) :

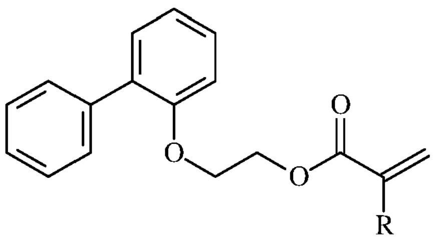

(III)

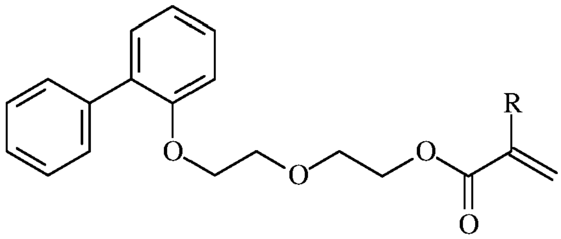

(IV)

avec R étant méthyle ou H, de préférence H.

Ledit monomère c) est un monomère ou/et oligomère (méth)acrylate de fonctionnalité en (méth)acrylates d'au moins 2 choisi parmi uréthanes (méth)acrylates ou thiocarbamates (méth)acrylates. Lesdits uréthanes (méth)acrylates oligomères peuvent être les produits de réaction d'un polyisocyanate avec un oligomère mono(méth)acrylate porteur d'un groupement hydroxy éventuellement en présence d'un diol allongeur de chaîne ou entre un oligomère diol avec un polyisocyanate en présence d'un hydroxy alkyl (méth)acrylate. Lesdits diols allongeurs peuvent être des alkylène diols en C2 à C8, des polyéthers diols des polyesters diols. Lesdits thiocarbamates oligomères sont obtenus de manière analogue aux oligomères uréthanes en remplaçant l'allongeur diol par un allongeur dithiol ($R-(SH)_2$) y compris alkylène dithiol ou polythioether dithiols.

Les oligomères uréthane (méth)acrylates selon c) peuvent être obtenus par exemple, à partir d'un polyisocyanate, un hydroxyalkyl (méth)acrylate avec alkyl en C2-C4 et d'un polyol oligomère, en particulier diol oligomère, ledit oligomère pouvant être choisi parmi polyester polyols, en particulier diols, polyéthers polyols, en particulier diols ou polyols d'alkylènes alkoxylés et en particulier diols d'alkylènes alkoxylés ou parmi les polycarbonates polyols et en particulier diols, plus particulièrement polycarbonates diols aromatiques.

Ledit monomère d) tel que défini dans la composition selon l'invention a une fonctionnalité en (méth)acrylates allant de 1 à 6 et de préférence, il est sélectionné parmi les esters mono(méth)acryliques d'alcools aliphatiques en C1 à C18 ou d'alcools cycloaliphatiques en C6 à C18 ou parmi les esters (méth)acryliques multifonctionnels (de fonctionnalité 2 à 6) de polyols en C2 à C18, en particulier parmi les esters (méth)acryliques multifonctionnels de polyols en C3 à C18 ou parmi les hydroxy alkyl (méth)acrylates, en particulier les hydroxy C2-C6 alkyl (méth)acrylates, les époxy(méth)acrylates, les aminoacrylates et les uréthane (méth)acrylates et en option ledit monomère d) comprend au moins une unité de structure alkoxy.

Comme exemples convenables de monoesters (méth)acryliques d'alcools aliphatiques en C1 à C18, on peut citer les mono(méth)acrylates d'alcanols en C1 à C18, tels que le (méth)acrylate de méthyle, d'éthyle, de propyle, de butyle, de pentyle, d'hexyle, d'heptyle, d'octyle, de 2-éthyl hexyle de nonyle, de décyle, de lauryle, de stéaryle et de tous leurs isomères quand plusieurs isomères sont possibles pour un alcanol, ledit alcanol pouvant être alcoxylé avec 1 à 5 unités alkoxy parmi éthoxy et/ou propoxy. Comme monoesters (méth)acryliques d'alcools cycloaliphatiques en C6 à C18, on peut citer le (méth)acrylate du cyclohexanol et de ses dérivés substitués sur le cycle en C6, le (méth)acrylate d'isobornyle, le (méth)acrylate d'isophoronyle, le (méth)acrylate de dicyclopentadienyle, avec lesdits (méth)acrylates pouvant être alcoxylés (à partir de cycloalcanols alcoxylés) comme les (méth)acrylates desdits alcanols.

Comme esters (méth)acryliques multifonctionnels de polyols en C2 à C18 convenables comme composant d) de la composition selon l'invention, on peut citer le di(méth)acrylate d'éthylène glycol, le di(méth)acrylate de diéthylène glycol, le di(méth)acrylate de triéthylène glycol, le di(méth)acrylate de propylène glycol, le di(méth)acrylate de dipropylène glycol, le di(méth)acrylate de butylène glycol, le di(méth)acrylate de pentane diol, le di(méth)acrylate de néopentyl glycol,

le di(méth)acrylate d'hexane diol, le di(méth)acrylate de cyclohexane diol, le di(méth)acrylate de tricyclodecanedimethanol, le tri(méth)acrylate de glycérol, le tri(méth)acrylate de triméthylol propane, le tétra(méth)acrylate de di(triméthylol propane)éther, le tétra(méth)acrylate de pentaérythritol, l'hexa(méth)acrylate de di(pentaérythritol) éther.

Comme monomères hydroxy alkyl (méth)acrylates convenables comme composant d), on peut citer les monohydroxy esters (méth)acryliques de polyols de fonctionnalité en OH au départ allant de 2 à 6 et plus particulièrement de 2. Dans le cas de diols, il s'agit de mono hydroxy monoesters (méth)acryliques. Dans le cas de polyols de fonctionnalité supérieure à 2 (3 à 6), lesdits monohydroxy esters (méth)acryliques peuvent comporter en plus de la fonction hydroxy de 2 à 5 fonctions (méth)acrylates pour une fonction hydroxy. De préférence, lesdits hydroxy alkyl (méth)acrylates sont des monohydroxy monoesters (méth)acryliques d'un diol d'alkylène en C2 à C6 et plus préférentiellement, il s'agit d'hydroxy éthyl (méth)acrylate, d'hydroxy propyl (méth)acrylate ou d'hydroxy butyl (méth)acrylate.

Une autre catégorie particulière de monomères (méth)acryliques de fonctionnalité de 1 à 6 pouvant convenir comme monomère d) dans la composition selon l'invention est la catégorie d'époxy (méth)acrylates. Ces monomères, s'ils ne sont pas alkoxylés, peuvent être préparés par l'estérification par l'acide (méth)acrylique d'un composé époxydé précurseur du monomère époxy (méth)acrylate visé, avec ledit précurseur époxydé ayant une fonctionnalité en groupements époxy (oxirane) identique à la fonctionnalité en (méth)acrylates du monomère époxy (méth)acrylate visé. Une telle (méth)acrylation avec ouverture du cycle oxirane conduit à un groupement ester (méth)acrylique et un groupement OH secondaire pour chaque groupement oxirane ayant réagi. Dans le cas d'époxy (méth)acrylates alcoxylés, l'alcoxylation est faite directement sur le composé époxydé avec formation de pont éther entre l'oxirane terminal du composé époxydé et l'oxyde d'alkylène (oxyde d'éthylène et/ou oxyde de propylène) utilisé comme agent d'alcoxylation conduisant pour un précurseur époxydé diépoxydé comme le diglycidyle éther de bisphénol A à un diol alcoxylé du diglycidyl éther de bisphénol A, lequel peut être (méth)acrylé par estérification avec l'acide (méth)acrylique, obtenant dans le cas du dérivé alcoxylé du diglycidyle éther de bisphénol A, le di(méth)acrylate alcoxylé du diglycidyle éther de bisphénol A (par exemple avec 1 à 10 unités d'éthoxy et/ou de propoxy).

Comme autres monomères convenables comme composant d) dans la composition selon l'invention comme définie ci-dessus, il y a la catégorie des amino-acrylates de fonctionnalité allant de 1 à 5. Ces monomères comprennent un groupement aminoacrylate ₌N-CH2-CH2 qui résulte de la réaction de Michael par addition d'un groupement ₌NH d'une amine sur un monomère acrylate multifonctionnel de fonctionnalité allant de 2 à 6 avec les groupements amines ₌NH étant en défaut par rapport aux groupements acrylates de sorte qu'il y ait au moins un groupement acrylate par molécule d'acrylate multifonctionnel de départ, non saturé par lesdits groupements amines. L'amine utilisée est de préférence une monoamine et en particulier secondaire, pouvant comprendre un groupement d'amine tertiaire (non réactive par addition de Michael).

Une autre catégorie de monomères convenables comme monomère d) dans la composition selon l'invention est la catégorie des monomères uréthanes (méth)acrylates. Il s'agit de monomères qui résultent de la réaction d'un monoisocyanate ou d'un polyisocyanate aliphatique, cycloaliphatique ou aromatique avec des hydroxy alkyl (méth)acrylates, de préférence avec ledit alkyl étant en C2 à C6. Selon une option particulière de la composition selon l'invention, ledit monomère d) comprend une ou plusieurs unités alkoxy, de préférence choisies parmi éthoxy, propoxy, butoxy ou parmi leurs mélanges.

Concernant ledit oligomère e) qui est un polyester (méth)acrylate, polyéther (méth)acrylate ou époxy (méth)acrylate il peut avoir une fonctionnalité (méth)acrylate allant de 1 à 15 ou de 1 à 10. Ledit oligomère a une masse moléculaire moyenne en nombre Mn qui est supérieure à 600 et de préférence d'au moins 800, plus préférentiellement d'au moins 1000. La Mn est déterminée par GPC en équivalents polystyrène dans le THF.

Les polyesters (méth)acrylates selon e) sont obtenus à partir de la (méth)acrylation partielle ou totale de polyols polyesters (avec fonctionnalité correspondante en OH permettant la fonctionnalité (méth)acrylate finale après (méth)acrylation) qui résultent de la polycondensation d'un polyol avec un polyacide avec élimination de l'eau d'estérification. En particulier, les polyesters diols résultent de la polycondensation d'un diacide. Les polyesters diols peuvent également résulter de la polymérisation d'une lactone cyclique comme la caprolactone. Ils peuvent être de structure aliphatique, cycloaliphatique ou aromatique ou de structure mixte suivant la structure des composants précurseurs diacides et diols.

Les polyéthers (méth)acrylates selon e) résultent de la (méth)acrylation de polyols polyéthers (ayant une fonctionnalité OH convenable permettant la fonctionnalité finale visée en (méth)acrylates). Les oligomères polyéthers polyols utilisables pour cette (méth)acrylation peuvent être des polyoxyéthylene polyols, polyoxypropylène polyols des copolymères statistiques ou en bloc polyoxyéthylène-polyoxypropylène ou des polyoxytéthaméthylènes (polytétrahydrofuranes ou polyTHF).

Les oligomères époxy (méth)acrylates sont obtenus par réaction d'un oligomère mono ou polyépoxydé avec l'acide (méth)acrylique. Comme exemples on peut citer : le di (méth)acrylate de DGEBA (diglycidyl éther de bisphénol A)

La composition selon l'invention a un taux en poids du composant a) par rapport au poids a) + b) qui peut varier de 20 à 80% et de préférence de 35 à 65%.

Concernant le taux en poids dudit composant c) par rapport au poids a) + b), il peut varier de 0 à 50% et de

préférence de 5 à 35%.

Concernant le taux en poids du composant d) par rapport au poids a) + b), il peut varier de 0 à 50% et de préférence de 5 à 35%.

Concernant le taux en poids du composant e) par rapport au poids a) + b), il peut varier de 0 à 50% ou de 0 à 40% et de préférence de 5 à 30% ou de 10 à 30%.

Le pourcentage en poids du composant a) par rapport au poids de la composition peut aller de 1 à 50%, ou 2 à 40%, ou 5 à 30% ou 10 à 20%.

Le pourcentage en poids du composant b) par rapport au poids de la composition peut aller de 1 à 50%, ou 2 à 40%, ou 5 à 30% ou 10 à 20%.

Le pourcentage en poids total des composants a) + b) par rapport au poids de la composition peut aller de 5 à 90%, ou 10 à 80%, ou 15 à 70% ou 20 à 60%.

Le pourcentage en poids du composant c) par rapport au poids de la composition peut aller de 0 à 50%, ou 1 à 40%, ou 5 à 30% ou 10 à 20%.

Le pourcentage en poids du composant d) par rapport au poids de la composition peut aller de 0 à 50%, ou 1 à 40%, ou 5 à 30% ou 10 à 20%.

Le pourcentage en poids du composant e) par rapport au poids de la composition peut aller de 0 à 50%, ou 1 à 40%, ou 5 à 30% ou 10 à 20%.

Selon une option particulière, la composition selon l'invention peut comprendre en plus de a) et b) et en option de c) à e), au moins un amorceur.

Ledit amorceur peut être sélectionné parmi un peroxyde ou hydroperoxyde et dans ce cas ladite composition de l'invention est réticulable par voie thermique ou à basse température en présence d'un accélérateur réducteur dudit peroxyde ou hydroperoxyde. Comme accélérateur réducteur dudit peroxyde ou hydroperoxyde accélérant sa décomposition à basse température (en particulier à l'ambiante : 15-25°C), on peut utiliser une amine tertiaire.

En option alternative, la composition de la présente invention peut comprendre un amorceur qui est au moins un photoamorceur et dans ce cas ladite composition selon l'invention est réticulable par rayonnement UV y compris proche UV visible, de préférence par lampe UV visible ou proche UV visible, par laser ou par LED, de préférence lampe proche UV visible. La plage des longueurs d'ondes qui correspond au rayonnement proche UV visible va de 355 à 415 nm et celle qui correspond à l'UV visible de 400 à 800 nm.

Selon une autre option alternative, la composition selon l'invention ne comprend aucun amorceur et dans ce cas elle n'est réticulable que par rayonnement EB (c'est-à-dire par faisceau d'électrons).

Selon une autre alternative, la composition de l'invention est réticulable par voie duale, ce qui signifie qu'elle combine au moins deux techniques de réticulation telles que définies ci-haut comme autres voies alternatives. Les deux techniques de réticulation peuvent être choisies parmi :

- réticulation par voie thermique en utilisant comme amorceur un peroxyde ou hydroperoxyde en présence d'un accélérateur réducteur dudit peroxyde ou hydroperoxyde,
- réticulation par rayonnement UV (y compris proche UV visible, de préférence par lampe UV visible ou proche UV visible), laser ou LED en utilisant comme amorceur un photoamorceur, et
- réticulation par rayonnement EB (avec un faisceau d'électrons).

Comme exemples de voies duales sous cette définition alternative, on peut citer la combinaison d'une voie basée sur la présence d'un peroxyde/hydroperoxyde avec celle où au moins un photoamorceur est présent. Dans un tel cas, on peut réticuler la composition soit en simultané soit en étapes successives par voie thermique ou basse température en présence de peroxyde/hydroperoxyde et par voie sous rayonnement UV avec la présence supplémentaire d'un photoamorceur. Par exemple, une réticulation rapide par voie UV en présence de photoamorceur peut être suivie par une réticulation supplémentaire par voie thermique du fait de la présence d'un peroxyde/hydroperoxyde avec ledit photoamorceur, permettant ainsi de parfaire/compléter la réticulation, en particulier à une température supérieure à celle de la réticulation UV. Ceci peut être en particulier intéressant quand la température de transition vitreuse de la composition complètement réticulée est supérieure à celle de la température de réticulation UV.

Comme exemples de peroxydes convenables, on peut citer notamment : dialkyl, diaryl et aryl/alkyl péroxydes, hydropéroxydes, percarbonates, peresters, peracides et acyl peroxydes.

Comme exemples d'accélérateurs de décomposition (réducteurs) des peroxydes ou hydroperoxydes, on peut citer notamment : les amines tertiaires et/ou un ou plusieurs agents de réduction contenant des sels de métaux de transition, tels que les carboxylates de fer, de cobalt, de manganèse ou de vanadium.

Comme exemples de photoamorceurs convenables, on peut citer notamment les dérivés de : benzoines, ethers de benzoine, acetophenones, benzyles, benzylcétals, anthraquinones, oxydes d'acylphosphine, alpha-hydroxycétones, phenylglyoxylates, alpha-aminocétones, benzophenones, thioxanthones, xanthones, dérivés de quinoxaline et les composés de triazine.

Comme exemples de photoamorceurs radicalaires particulièrement convenables, on peut citer notamment : 2-méthylanthraquinone, 2-éthylanthraquinone, 2-chloroanthraquinone, 2-benzylanthraquinone, 2-t-butylanthraquinone, 1,2-benzo-9,10-anthraquinone, benzyles, benzoines, éthers de benzoine, méthyl éther de benzoine, éthyl éther de benzoine, isopropyl éther de benzoine, alpha-méthylbenzoine, alpha-phénylbenzoine, cétones de Michler, acétophénones telles que 2,2-dialkoxybenzophenones et 1-hydroxyphenyl cétone, benzophénone, 4,4' -bis-( diéthylamino) benzophénone, acétophénone, 2,2-diéthyloxyacétophénone, diéthyloxyacétophénone, 2-isopropylthioxanthone, thioxanthone, diéthyl thioxanthone, 1,5-acétonaphthylène, éthyl-p-diméthylaminobenzoate, benzyl cétone, oxyde de 2,4,6-triméthylbenzoyldiphényl phosphine, benzyl diméthyl cétal, 2,2-diméthoxy-1,2-diphényléthanone, 1-hydroxycylclohexyl phényl cétone, 2-méthyl-1-[4-(méthylthio) phényl]-2-morpholinopropanone-1, 2-hydroxy-2-méthyl-1-phényl-propanone, alpha-hydroxy cétone oligomérique, oxydes de benzoyl phosphine, oxyde de phenylbis(2,4,6-triméthylbenzoyl)phosphine, benzoate d'éthyl-4-diméthylamine, phosphinate d'éthyl(2,4,6-triméthylbenzoyl)phényle, anthraquinone, (benzène) tricarbonylchromium, benzyle, isobutyl éther de benzoine, dianhydride de 3,3',4,4'-benzophénone tetracarboxylique, 4-benzoylbiphényle, 2-benzyl-2-(diméthylamino)-4'morpholinobutyrophénone, 4,4'-bis(diéthylamino)benzophénone, 4,4'-bis(diméthylamino)benzophénone, camphorquinone, 2-chlorothioxanthèn-9-one, dibenzosubérénone, 4,4'-dihydroxybenzophénone, 2,2-diméthoxy-2-phenylacétophénone, 4-(diméthylamino)benzophénone, 4,4'-diméthylbenzyle, 2,5-diméthylbenzophénone, 3,4-diméthylbenzophénone, 4'-ethoxyacetophenone, oxyde de 2,4,6-triméthylbenzoyldiphénylphophine, oxyde de phényl bis(2,4,6-triméthyl benzoyl)phosphine, ferrocène, 3'-hydroxyacétophénone, 4'-hydroxyacétophénone, 3-hydroxybenzophénone, 4-hydroxybenzophénone, 1-hydroxycyclohexyl phényl cétone, 2-hydroxy-2-méthylpropiophénone, 2-méthylbenzophénone, 3-méthylbenzophénone, méthybenzoylformate, 2-méthyl-4'(méthylthio)-2-morpholinopropiophénone, phénanthrènequinone, 4'-phénoxyacétophénone, (cumène)cyclopentadiényl hexafluorophosphate de fer(II), 9,10-diéthoxy et 9,10-dibutoxyanthracène, 2-éthyl-9, 10-diméthoxyanthracène, thioxanthèn-9-one ou toute combinaison des amorceurs précédemment cités. De préférence, la composition selon l'invention a une viscosité à 25°C selon méthode ISO 3219 (1993) inférieure à 5000 mPa.s et de préférence inférieure à 3000 mPa.s et plus préférentiellement inférieure à 2500 mPa.s. Plus particulièrement, après réticulation, elle a une HDT selon la méthode ISO 075 (2004) d'au moins 70°C et de préférence supérieure à 80°C. En particulier, après réticulation, elle a un module de Young à 25°C selon la méthode ISO 527 (1993) d'au moins 2500 MPa, de préférence d'au moins 3000 MPa.

De préférence, la composition selon l'invention a un IR avant réticulation selon la norme ASTM D1218 - 12(2016) d'au moins 1,47, de préférence supérieur à 1,52 et plus particulièrement supérieur à 1,56 et après réticulation d'au moins 1,50 et de préférence supérieur à 1,55 et plus particulièrement d'au moins 1,57.

Un deuxième objet de l'invention concerne l'utilisation d'une composition selon l'invention pour la réalisation de revêtements ou de matériaux ayant une HDT selon la méthode ISO 075 (2004) d'au moins 70°C et de préférence supérieure à 80°C et/ou un IR d'au moins 1,50, de préférence supérieur à 1,55 et plus particulièrement supérieur à 1,57.

Plus particulièrement, ladite utilisation concerne des matériaux qui sont soit des articles imprimés en 3D, soit des matériaux différents des articles imprimés en 3D. Le terme « matériaux différents des articles imprimés en 3D » signifie ici des matériaux pour procédés d'injection/moulage (par définition, non imprimés). En effet, les compositions réticulables selon l'invention en dehors de l'impression 3D, visée en particulier, conviennent également pour la réalisation d'objets (articles) 3D par d'autres méthodes comme par exemple le moulage.

Selon une option préférée, ladite utilisation concerne des articles imprimés en 3D. Ces articles imprimés en 3D peuvent être imprimés par différents procédés, en particulier par un procédé d'impression couche par couche ou par un procédé en continu.

Un procédé d'impression 3D « couche par couche » comprend les étapes suivantes :

a) déposer sur une surface une première couche de composition réticulable selon l'invention,
b) réticuler ladite première couche, au moins partiellement, pour obtenir une première couche réticulée,
c) déposer sur ladite première couche réticulée, une seconde couche de composition réticulable selon l'invention,
d) réticuler ladite seconde couche, au moins partiellement, pour obtenir une seconde couche réticulée, laquelle est adhérée à la première couche réticulée ; et
e) répéter les étapes c) et d) le nombre de fois nécessaire à l'obtention de l'article 3D (ou tridimensionnel) final.

Les voies de réticulation utilisables sont celles déjà décrites ci-dessus avec une préférence particulière aux techniques de réticulation sous radiation actinique (UV, UV visible, proche UV visible ou sous faisceau d'électrons EB).

La composition réticulable de la présente invention peut également être utilisée dans des procédés de production d'objets (articles) tridimensionnels (3D) selon un procédé continu appelé aussi méthode ou procédé CLIP à partir de son nom en anglais : « Continuous Liquid Interface (or interphase) Product (or Printing) ». Ce type de procédé est décrit dans WO 2014/126830, WO 2014/126834 et WO 2014/126837 et dans Tumbleston et al., « Continuous Liquid Interface Production of 3D Objects », Science Vol. 347, Issue 6228, pp. 1349-1352 (March 20, 2015).

Le procédé CLIP procède par projection d'un film ou d'une séquence continue d'images par radiation actinique par exemple UV qui peuvent être générées par exemple, par une unité d'imagerie numérique, à travers une fenêtre

transparente à ladite radiation actinique et perméable à l'oxygène (inhibiteur), située sous un bain de la composition réticulable (durcissable) maintenue sous forme liquide. Une interface liquide au-dessous de l'article (en croissance) est maintenue par la zone morte créée au-dessus de la fenêtre. L'article solide durci est extrait en continu du bain de composition réticulable au-dessus de la zone morte, qui peut être régénéré en introduisant dans le bain des quantités supplémentaires de la composition réticulable pour compenser les quantités de composition réticulable durcies et incorporées dans l'article en croissance.

Par exemple, un procédé d'impression d'un article tridimensionnel utilisant la composition réticulable de l'invention peut comprendre au moins les étapes suivantes :

a) fournir un support (ou plateau d'impression) et un élément optiquement transparent ayant une surface de construction, le support et la surface de construction définissant entre eux une région de construction,
b) remplir ladite région de construction avec la composition réticulable selon l'invention,
c) irradier de façon continue ou intermittente ladite région de construction avec une radiation actinique, pour former à partir de la composition réticulable une composition réticulée, et
d) continuellement ou de manière intermittente, éloigner ledit support de la surface de construction pour former l'article tridimensionnel (3D) avec la composition réticulée.

Plus particulièrement, le procédé continu d'impression (type CLIP) peut comprendre les étapes suivantes : (a) fournir un support (ou plateau d'impression) et une fenêtre de construction stationnaire, la fenêtre de construction comprenant un élément semi-perméable, ledit élément semi-perméable comprenant une surface de construction et une surface d'alimentation séparée de la surface de construction avec ladite surface de construction et ledit support (ou plateau d'impression) définissant entre eux une région de construction et avec la surface d'alimentation en contact liquide avec un inhibiteur de polymérisation, (b) ensuite et en même temps et/ou séquentiellement, remplir la région de construction avec une composition réticulable selon l'invention avec ladite composition étant en contact avec le plateau d'impression, (c) irradier la région de construction à travers la fenêtre de construction pour produire une région polymérisée solide dans la région de construction avec une couche restante de film liquide constituée de la composition durcissable, formée entre la région polymérisée solide et la fenêtre de construction, la polymérisation du film liquide étant inhibée par l'inhibiteur de polymérisation et (d) éloigner le plateau d'impression, sur lequel est adhérée la région polymérisée, de la surface de construction de la fenêtre stationnaire afin de créer une région de construction entre la région polymérisée et la fenêtre de construction stationnaire. En général, le procédé inclut l'étape (e) la répétition et/ou la poursuite des étapes de (b) à (d) pour produire ensuite une région polymérisée adhérée à une région précédemment polymérisée jusqu'à ce que le dépôt en continu ou répété de régions polymérisées adhérées les unes aux autres forme l'article tridimensionnel visé.

Les articles imprimés en 3D obtenus par l'utilisation de la composition réticulable (durcissable) selon l'invention ont, en particulier, pour les applications optiques, un indice de réfraction IR d'au moins 1,50, de préférence supérieur à 1,55 et plus particulièrement d'au moins à 1,57.

Plus particulièrement, les applications optiques visées sont pour : lentilles plastiques, en particulier lentilles pour verres ophtalmiques, lentilles pour caméras numériques, lentilles pour prismes optiques ou revêtements optiques parmi sur-revêtements ('over-coatings') optiques, revêtements optiques durs ou films antireflets ou pour revêtement de LED ou de cellules solaires (photovoltaïques) ou fibres optiques, hologrammes, lentilles pour prisme et matériaux LED.

Un autre objet faisant également partie de la présente invention concerne une composition réticulée, laquelle résulte de la réticulation d'au moins une composition telle que définie ci-haut selon l'invention.

Finalement, la présente invention couvre également un produit fini, lequel résulte de la réticulation d'au moins une composition telle que définie selon l'invention ou lequel comprend au moins une composition réticulée telle que définie ci-avant.

Ledit produit fini est en particulier un revêtement, un matériau moulé, par exemple composite, un article imprimé 3D.

Plus particulièrement, ledit produit fini est un article imprimé en 3D et de préférence sélectionné parmi : lentilles plastiques, en particulier lentilles pour verres ophtalmiques, lentilles pour caméras numériques, lentilles pour prismes optiques ou revêtements optiques parmi sur-revêtements ('over-coatings') optiques, revêtements optiques durs ou films antireflets ou pour revêtement de LED ou de cellules solaires (photovoltaïques) ou fibres optiques, hologrammes, lentilles pour prisme et matériaux LED.

Les exemples suivants sont donnés à titre d'illustration de l'invention et de ses performances et ne limitent nullement sa portée, laquelle est définie par les revendications.

## EXEMPLES

### 1) Formulations

Les formulations des exemples 1 à 6 contenant du tétraméthacrylate de diglycidyl éther de biphényl fluorène sont préparées avec les composés décrits ci-dessous dans les proportions indiquées au Tableau 1 (% en poids par rapport au poids de la formulation) :

| | |
|---|---|
| Composé A : | tétraméthacrylate de diglycidyl éther de biphényl fluorène Le tétraméthacrylate de diglycidyl éther de biphényl fluorène est préparé selon les mêmes conditions décrites dans US 6,515,166 pour préparer le tétraméthacrylate de diglycidyl éther de bisphénol A à partir de diglycidyl éther de bisphénol A et lesquelles conditions sont appliquées ici au diglycidyl éther de biphényl fluorène pour obtenir le tétraméthacrylate de diglycidyl éther de biphényl fluorène. |
| Composé B : | H008 de KPX Green Chemical, acrylate de biphényl-4-méthanolc |
| Composé C : | A011 de KPX Green Chemical, acrylate de biphényl-2-ol éthoxylé (1 EO) |
| Composé D : | A003M de KPX Green Chemical, benzyl méthacrylate |
| Composé E : | CD590 de Sartomer, 4-cumylphénol acrylate |
| Composé F : | HPMA de Evonik, hydroxypropyl méthacrylate |
| Composé G : | SR340 de Sartomer, 2-phénoxyéthyl méthacrylate |

[Tableau 1]

| Composé | Exemple 1 | Exemple 2 | Exemple 3 | Exemple 4 | Exemple 5 | Exemple 6 |
|---|---|---|---|---|---|---|
| A | 51.0 | 64.0 | 48.0 | 46.0 | 50 | 50 |
| B | 9.0 | / | / | / | / | / |
| C | / | / | 35.0 | 32.5 | 23.5 | 27.5 |
| D | / | 20.0 | / | / | 14.0 | / |
| E | 25.0 | 16.0 | 12.0 | 11.5 | 12.5 | 12.5 |
| F | 15.0 | / | 5.0 | 10.0 | / | / |
| G | / | / | / | / | / | 10.0 |
| Total : | 100.0 | 100.0 | 100.0 | 100.0 | 100.0 | 100.0 |

### 2) Caractéristiques des formulations liquides, avant réticulation

Afin de caractériser les formulations liquides, des mesures de viscosité et d'indice de réfraction sont effectuées dans les conditions suivantes :

- Viscosité Brookfield : la viscosité a été mesurée à 25°C sur un viscosimètre de marque Brookfield DVII+ PRO selon la norme ISO 3219 (1993)

- Indice de réfraction : l'indice de réfraction est mesuré sur un réfractomètre BELLINGHAM+STANLEY RFM 960-T à 25°C selon la norme ASTM D1218 - 12(2016).

Les résultats sont présentés au Tableau 2 ci-dessous.
Caractéristiques des formulations liquides des exemples 1 à 6

[Tableau 2]

| | Exemple 1 | Exemple 2 | Exemple 3 | Exemple 4 | Exemple 5 | Exemple 6 |
|---|---|---|---|---|---|---|
| Indice de réfraction | 1.563 | 1.563 | 1.569 | 1.562 | 1.570 | 1.569 |
| Viscosité Brookfield @25°C (mPa.s) | 2270 | 4200 | 4000 | 2050 | 1880 | 4800 |

**3) Caractéristiques physico-chimiques après réticulation**

**Echantillons**

Les échantillons sont préparés à partir de moules en silicone. Les barreaux (DMA, HDT) ont pour dimension, en mm, 80*10*4 et les éprouvettes type 5A pour la traction 4 mm d'épaisseur. Le système de photoamorceur est le TPO-L (éthyl (2,4,6-triméthylbenzoyl) phényl phosphinate) 2% pour toutes les formules et la réticulation réalisée sous lampe LED banc UV 100% suivie d'une post-cuisson de 12 heures à 80°C.

**Conditions d'analyses**

Tests réalisés à 23°C sous humidité relative (HR) de 50%.

- Analyse DMA :
  L'analyse DMA est réalisée sur un appareil RDAIII (Rheometrics), en torsion rectangulaire, avec un balayage de -50°C à 200°C, à 3°C/min et une déformation nominale de 0,05% et une fréquence de 1 Hz. La température de transition T$\alpha$ est déterminée comme étant la température du sommet du pic de tan delta.
- HDT:
  Les essais de HDT (Heat Deflection Température : température de déflexion thermique) sont réalisés sur l'appareil HDT (EDIT) selon la norme ISO 075 (2004). La méthode A est utilisée (1,8 MPa), l'éprouvette (4mm d'épaisseur) est disposée à plat sur le support (distance entre appuis = 64 mm). La vitesse de chauffe est de 120°C/h.
- Test de traction :
  Les essais de traction sont réalisés sur machine de traction MTS cellule 500N selon la norme ISO 527 (1993). Les éprouvettes utilisées sont de Type 5A. La vitesse de traction est de 1 mm/min, puis 10 mm/min à partir de 7% d'allongement. On détermine la contrainte et élongation à la rupture et le module de Young.

**Résultats**

Les résultats des tests mécaniques et thermo-mécaniques effectués sur les échantillons solides des formulations des exemple 1 à 6 sont donnés dans le Tableau 3 ci-dessous.

Performances mécaniques et thermo-mécaniques des formulations des exemples 1 à 6

[Tableau 3]

| | Exemple 1 | Exemple 2 | Exemple 3 | Exemple 4 | Exemple 5 | Exemple 6 |
|---|---|---|---|---|---|---|
| **DMA (°C)** | 154 | 163 | 137 | 134 | 133 | 137 |
| **HDT (°C)** | 109 | 140 | 83 | 99 | 103 | 89 |
| **Test de Traction** | | | | | | |
| Contrainte (MPa) | 30 | 19 | 26 | 13 | 12 | 20 |
| Elongation rupture (%) | 1.5 | 1.3 | 1.2 | 1.0 | 1.0 | 1.2 |
| Module d'Young (MPa) | 3200 | 3100 | 3200 | 3100 | 3000 | 3900 |

**Revendications**

1. Composition réticulable, **caractérisée en ce qu'**elle comprend :

   a) au moins un oligomère tétra(méth)acrylate de diglycidyle éther de biphényl fluorène

b) au moins un diluant parmi les mono(méth)acrylates d'un monoalcool comprenant une structure biphényle, cumyle ou benzyle,

c) en option, au moins un oligomère (méth)acrylate de fonctionnalité en (méth)acrylates d'au moins 2 choisi parmi uréthanes (méth)acrylates ou thiocarbamates (méth)acrylates.

d) en option, au moins un monomère ester (méth)acrylate ou uréthane (méth)acrylate de fonctionnalité allant de 1 à 6 différent de b),

e) en option, au moins un oligomère parmi polyester (méth)acrylate, polyéther (méth)acrylate ou époxy (méth)acrylate de fonctionnalité allant de 1 à 15.

2. Composition selon la revendication 1, **caractérisée en ce que** ledit composant a) est le tétra(méth)acrylate de diglycidyle éther de bisphénol fluorène de formule suivante (I) :

[Chem 1]

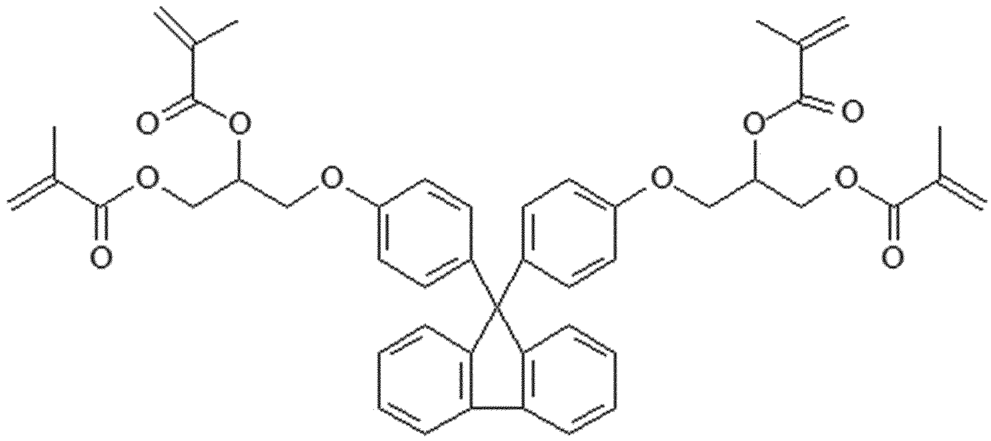

(I)

ou le tétraacrylate de diglycidyle éther de bisphénol fluorène, de même formule (I) sauf que le groupement méthyle du méthacrylate est absent, avec tous les groupements méthacrylates étant remplacés par des groupements acrylates.

3. Composition selon la revendication 1 ou 2, **caractérisée en ce que** le composant b) est le mono (méth)acrylate de biphényle méthanol de formule suivante (II) ou un composé de formule (III) ou (IV) :

[Chem 2]

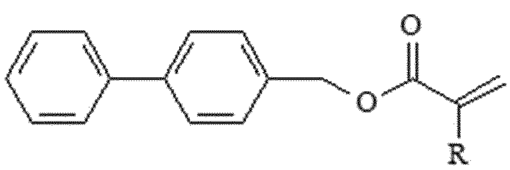

(II)

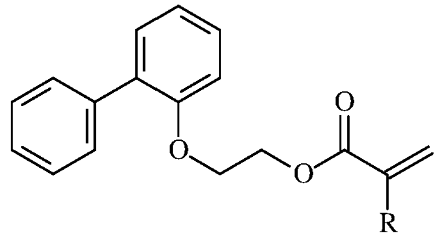

(III)

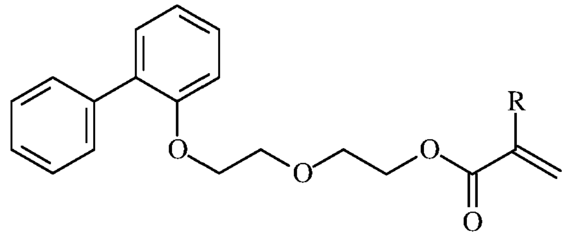

(IV)

avec R étant méthyle ou H, de préférence H.

4. Composition selon l'une des revendications 1 à 3, **caractérisée en ce que** le taux en poids du composant a) par rapport au poids a) + b) varie de 20 à 80%, de préférence de 35 à 65%.

5. Composition selon l'une des revendications 1 à 4, **caractérisée en ce qu'**elle a une viscosité à 25°C selon la méthode ISO 3219 (1993) inférieure à 5000 mPa.s et de préférence inférieure à 3000 mPa.s, plus préférentiellement inférieure à 2500 mPa.s.

6. Composition selon l'une des revendications 1 à 5, **caractérisée en ce qu'**après réticulation, elle a une HDT selon la méthode ISO 075 (2004) d'au moins 70°C et de préférence supérieure à 80°C.

7. Composition selon l'une des revendications 1 à 6, **caractérisée en ce qu'**après réticulation, elle a un module de Young à 25°C selon la méthode ISO 527 (1993) d'au moins 2500 MPa, de préférence d'au moins 3000 MPa.

8. Composition selon l'une des revendications 1 à 7, **caractérisée en ce qu'**elle a un IR avant réticulation selon la norme ASTM D1218 - 12(2016) d'au moins 1,47, de préférence supérieur à 1,52 et plus particulièrement supérieur à 1,56 et après réticulation d'au moins 1,50 et de préférence supérieur à 1,55 et plus particulièrement d'au moins 1,57.

9. Utilisation d'une composition selon l'une des revendications 1 à 8 pour la réalisation de revêtements ou de matériaux ayant une HDT selon méthode ISO 075 (2004) d'au moins 70°C et de préférence supérieure à 80°C et/ou un IR d'au moins 1,50, de préférence supérieur à 1,55 et plus particulièrement d'au moins 1,57.

10. Utilisation selon la revendication 9, **caractérisée en ce que** lesdits matériaux sont des articles imprimés en 3D ou des matériaux différents des articles imprimés 3D.

11. Utilisation selon la revendication 9 ou 10, **caractérisée en ce qu'**elle concerne des articles imprimés en 3D ayant un indice de réfraction IR, d'au moins 1,50, de préférence supérieur à 1,55 et plus particulièrement supérieur à 1,57.

12. Utilisation selon une des revendications 9 à 11, **caractérisée en ce qu'**elle concerne des applications optiques et de préférence pour :

- lentilles plastiques, en particulier lentilles pour verres ophtalmiques, lentilles pour caméras numériques, lentilles pour prismes optiques ou
- revêtements optiques parmi sur-revêtements ('over-coatings') optiques, revêtements optiques durs ou films antireflets ou pour revêtement de LED ou de cellules solaires (photovoltaïques) ou
- fibres optiques, hologrammes, lentilles pour prisme et matériaux LED.

13. Composition réticulée, **caractérisée en ce qu'**elle résulte de la réticulation d'au moins une composition telle que définie selon l'une des revendications 1 à 8.

14. Produit fini, **caractérisé en ce qu'**il résulte de la réticulation d'au moins une composition telle que définie selon l'une des revendications 1 à 8 ou **en ce qu'**il comprend au moins une composition réticulée telle que définie selon la revendication 13.

15. Produit fini selon la revendication 14, **caractérisé en ce qu'**il s'agit d'un revêtement, d'un matériau moulé, en particulier composite ou d'un article imprimé en 3D.

16. Produit fini selon la revendication 15, **caractérisé en ce qu'**il s'agit d'un article imprimé en 3D, de préférence sélectionné parmi :

- lentilles plastiques, en particulier lentilles pour verres ophtalmiques, lentilles pour caméras numériques, lentilles pour prismes optiques ou
- revêtements optiques parmi sur-revêtements ('over-coatings') optiques, revêtements optiques durs ou films antireflets ou pour revêtement de LED ou de cellules solaires (photovoltaïques) ou
- fibres optiques, hologrammes, lentilles pour prisme et matériaux LED.

## Patentansprüche

1. Vernetzbare Zusammensetzung, **dadurch gekennzeichnet, dass** sie Folgendes umfasst:

   a) mindestens ein Biphenylfluorendiglycidylether-tetra(meth)acrylat-Oligomer,
   b) mindestens ein Verdünnungsmittel aus Mono-(meth)acrylaten eines eine Biphenyl-, Cumyl- oder Benzylstruktur umfassenden Monoalkohols,
   c) optional mindestens ein (Meth)acrylat-Oligomer mit einer (Meth)acrylat-Funktionalität von mindestens 2, ausgewählt aus Urethan(meth)-acrylaten oder Thiocarbamat(meth)acrylaten,
   d) optional mindestens ein (Meth)acrylatester- oder Urethan(meth)acrylat-Monomer mit einer Funktionalität von 1 bis 6, das von b) verschieden ist,
   e) optional mindestens ein Oligomer aus Polyester-(meth)acrylat, Polyether(meth)acrylat oder Epoxy(meth)acrylat mit einer Funktionalität von 1 bis 15.

2. Zusammensetzung nach Anspruch 1, **dadurch gekennzeichnet, dass** es sich bei der Komponente a) um das Bisphenolfluorendiglycidylethertetra(meth)acrylat der folgenden Formel (I) handelt:

[Chem 1]

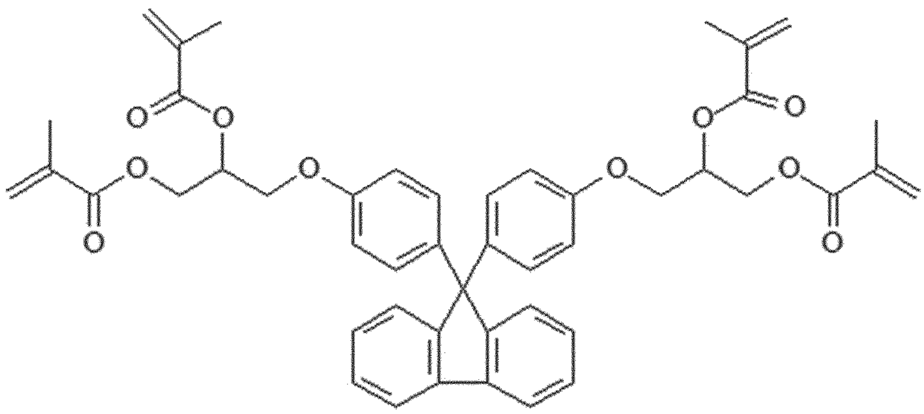

(I)

oder das Bisphenolfluorendiglycidylethertetraacrylat mit der gleichen Formel (I), außer dass die Methylgruppe des Methacrylats fehlt, wobei alle Methacrylatgruppen durch Acrylatgruppen ersetzt sind.

3. Zusammensetzung nach Anspruch 1 oder 2, **dadurch gekennzeichnet, dass** es sich bei der Komponente b) um das Biphenylmethanolmono(meth)acrylat der folgenden Formel (II) oder eine Verbindung der Formel (III) oder (IV) handelt:

[Chem 2]

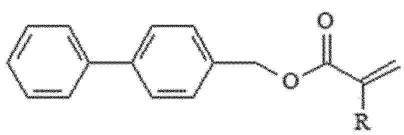

(II)

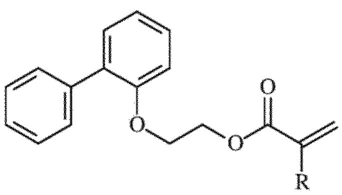

(III)

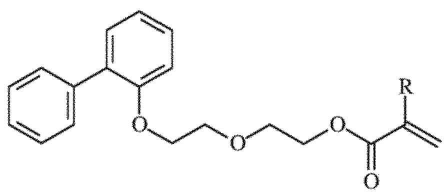

(IV)

wobei R für Methyl oder H, vorzugsweise H, steht.

**4.** Zusammensetzung nach einem der Ansprüche 1 bis 3, **dadurch gekennzeichnet, dass** der Gewichtsanteil der Komponente a) in Bezug auf das Gewicht a) + b) von 20 bis 80 %, vorzugsweise von 35 bis 65 %, variiert.

**5.** Zusammensetzung nach einem der Ansprüche 1 bis 4, **dadurch gekennzeichnet, dass** sie eine Viskosität bei 25 °C gemäß der Methode ISO 3219 (1993) von weniger als 5000 mPa.s und vorzugsweise weniger als 3000 mPa.s, weiter bevorzugt weniger als 2500 mPa.s, aufweist.

**6.** Zusammensetzung nach einem der Ansprüche 1 bis 5, **dadurch gekennzeichnet, dass** sie nach Vernetzung eine HDT gemäß der Methode ISO 075 (2004) von mindestens 70 °C und vorzugsweise mehr als 80 °C aufweist.

**7.** Zusammensetzung nach einem der Ansprüche 1 bis 6, **dadurch gekennzeichnet, dass** sie nach Vernetzung einen Elastizitätsmodul bei 25 °C gemäß der Methode ISO 527 (1993) von mindestens 2500 MPa, vorzugsweise mindestens 3000 MPa, aufweist.

**8.** Zusammensetzung nach einem der Ansprüche 1 bis 7, **dadurch gekennzeichnet, dass** sie einen RI gemäß der ASTM-Norm D1218 - 12 (2016) vor Vernetzung von mindestens 1,47, vorzugsweise mehr als 1,52 und spezieller mehr als 1,56 und nach Vernetzung von mindestens 1,50 und vorzugsweise mehr als 1,55 und spezieller mindestens 1,57 aufweist.

**9.** Verwendung einer Zusammensetzung nach einem der Ansprüche 1 bis 8 zur Herstellung von Beschichtungen oder von Materialien mit einer HDT gemäß der Methode ISO 075 (2004) von mindestens 70 °C und vorzugsweise mehr als 80 °C und/oder einem RI von mindestens 1,50, vorzugsweise mehr als 1,55 und spezieller mindestens 1,57.

**10.** Verwendung nach Anspruch 9, **dadurch gekennzeichnet, dass** es sich bei den Materialien um 3D-Druckartikel oder von 3D-Druckartikeln verschiedene Materialien handelt.

**11.** Verwendung nach Anspruch 9 oder 10, **dadurch gekennzeichnet, dass** sie 3D-Druckartikel mit einen Brechungsindex RI von mindestens 1,50, vorzugsweise mehr als 1,55 und spezieller mehr als 1,57 betrifft.

**12.** Verwendung nach einem der Ansprüche 9 bis 11, **dadurch gekennzeichnet, dass** sie optische Anwendungen betrifft und vorzugsweise für:

- Kunststofflinsen, insbesondere Linsen für ophthalmische Gläser, Linsen für Digitalkameras, Linsen für optische Prismen oder
- optische Beschichtungen aus optischen Überbeschichtungen ("Overcoatings"), harten optischen Beschichtungen oder reflexmindernden Filmen oder für die Beschichtung von LED oder Solarzellen (Photovoltaikzellen) oder
- Lichtleitfasern, Hologramme, Prismenlinsen und LED-Materialien.

**13.** Vernetzte Zusammensetzung, **dadurch gekennzeichnet, dass** sie aus der Vernetzung mindestens einer Zusammensetzung gemäß einem der Ansprüche 1 bis 8 resultiert.

**14.** Endprodukt, **dadurch gekennzeichnet, dass** es aus der Vernetzung mindestens einer Zusammensetzung gemäß einem der Ansprüche 1 bis 8 resultiert oder dass es mindestens eine vernetzte Zusammensetzung gemäß Anspruch 13 umfasst.

**15.** Endprodukt nach Anspruch 14, **dadurch gekennzeichnet, dass** es sich um eine Beschichtung, ein geformtes Material, insbesondere einen Verbundwerkstoff oder einen 3D-Druckartikel, handelt.

**16.** Endprodukt nach Anspruch 15, **dadurch gekennzeichnet, dass** es sich um einen 3D-Druckartikel handelt, der vorzugsweise ausgewählt ist aus:

- Kunststofflinsen, insbesondere Linsen für ophthalmische Gläser, Linsen für Digitalkameras, Linsen für optische Prismen oder
- optischen Beschichtungen aus optischen Überbeschichtungen ("Overcoatings"), harten optischen Beschichtungen oder reflexmindernden Filmen oder für die Beschichtung von LED oder Solarzellen (Photovoltaikzellen) oder
- Lichtleitfasern, Hologrammen, Prismenlinsen und LED-Materialien.

## Claims

1. Crosslinkable composition, **characterized in that** it comprises:

   a) at least one biphenylfluorene diglycidyl ether tetra(meth)acrylate oligomer,
   b) at least one diluent from mono(meth)acrylates of a monoalcohol comprising a biphenyl, cumyl or benzyl structure,
   c) optionally at least one (meth)acrylate oligomer with a (meth)acrylate functionality of at least 2, selected from urethane (meth)acrylates or thiocarbamate (meth)acrylates,
   d) optionally at least one urethane (meth)acrylate or (meth)acrylate ester monomer with a functionality of from 1 to 6, different from b),
   e) optionally at least one oligomer from polyester (meth)acrylate, polyether (meth)acrylate or epoxy (meth)acrylate with a functionality of from 1 to 15.

2. Composition according to Claim 1, **characterized in that** the said component a) is the bisphenolfluorene diglycidyl ether tetra(meth)acrylate of formula (I) below:

[Chem 1]

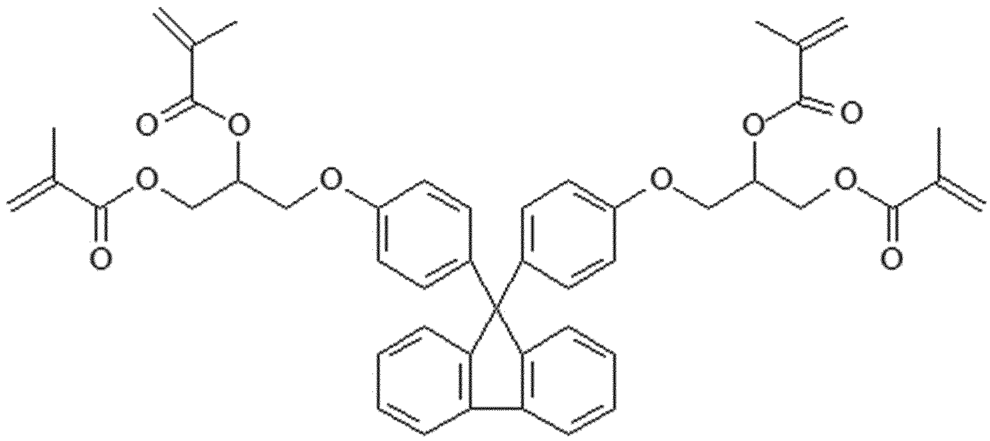

(I)

or the bisphenolfluorene diglycidyl ether tetraacrylate, of the same formula (I) except that the methyl group of the methacrylate is absent, with all of the methacrylate groups being replaced by acrylate groups.

3. Composition according to Claim 1 or 2, **characterized in that** the component b) is the biphenylmethanol mono-(meth)acrylate of formula (II) below or a compound of formula (III) or (IV) :

[Chem 2]

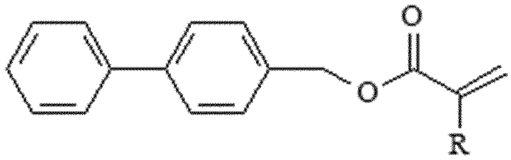

(II)

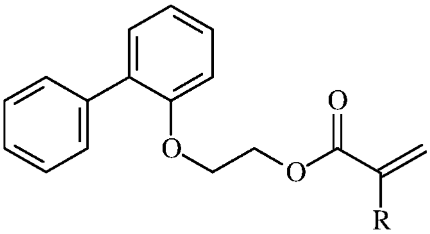

(III)

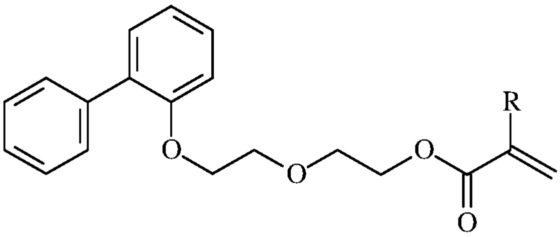

(IV)

with R being methyl or H, preferably H.

4. Composition according to one of Claims 1 to 3, **characterized in that** the content by weight of the component a), with respect to the weight a) + b), varies from 20% to 80%, preferably from 35% to 65%.

5. Composition according to one of Claims 1 to 4, **characterized in that** it has a viscosity at 25°C according to the ISO 3219 (1993) method of less than 5000 mPa.s and preferably of less than 3000 mPa.s, more preferably of less than 2500 mPa.s.

6. Composition according to one of Claims 1 to 5, **characterized in that**, after crosslinking, it has an HDT according to the ISO 075 (2004) method of at least 70°C and preferably of greater than 80°C.

7. Composition according to one of Claims 1 to 6, **characterized in that**, after crosslinking, it has a Young's modulus at 25°C according to the ISO 527 (1993) method of at least 2500 MPa, preferably of at least 3000 MPa.

8. Composition according to one of Claims 1 to 7, **characterized in that** it has an RI before crosslinking according to the ASTM D1218 - 12(2016) standard of at least 1.47, preferably of greater than 1.52 and more particularly of greater than 1.56 and, after crosslinking, of at least 1.50 and preferably of greater than 1.55 and more particularly of at least 1.57.

9. Use of a composition according to one of Claims 1 to 8 for the production of coatings or of materials having an HDT according to the ISO 075 (2004) method of at least 70°C and preferably of greater than 80°C and/or an RI of at least 1.50, preferably of greater than 1.55 and more particularly of at least 1.57.

10. Use according to Claim 9, **characterized in that** the said materials are 3D printed articles or materials different from 3D printed articles.

11. Use according to Claim 9 or 10, **characterized in that** it relates to 3D printed articles having a refractive index RI of at least 1.50, preferably of greater than 1.55 and more particularly of greater than 1.57.

**12.** Use according to one of Claims 9 to 11, **characterized in that** it relates to optical applications and preferably for:

- plastic lenses, in particular lenses for ophthalmic glasses, lenses for digital cameras or lenses for optical prisms, or
- optical coatings from among optical over-coatings, hard optical coatings or anti-reflective films or for coating of LEDs or of solar (photovoltaic) cells, or
- optical fibres, holograms, lenses for prisms and LED materials.

**13.** Crosslinked composition, **characterized in that** it results from the crosslinking of at least one composition as defined according to one of Claims 1 to 8.

**14.** Finished product, **characterized in that** it results from the crosslinking of at least one composition as defined according to one of Claims 1 to 8 or **in that** it comprises at least one crosslinked composition as defined according to Claim 13.

**15.** Finished product according to Claim 14, **characterized in that** it is a coating, a moulded material, in particular a composite material, or a 3D printed article.

**16.** Finished product according to Claim 15, **characterized in that** it is a 3D printed article, preferably selected from:

- plastic lenses, in particular lenses for ophthalmic glasses, lenses for digital cameras or lenses for optical prisms, or
- optical coatings from among optical over-coatings, hard optical coatings or anti-reflective films or for coating of LEDs or of solar (photovoltaic) cells, or
- optical fibres, holograms, lenses for prisms and LED materials.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2586802 B1
- EP 2664635 B1
- EP 2684903 B1
- US 6515166 B
- WO 2014126830 A
- WO 2014126834 A
- WO 2014126837 A


### Littérature non-brevet citée dans la description


- **TUMBLESTON et al.** Continuous Liquid Interface Production of 3D Objects. *Science,* 20 Mars 2015, vol. 347 (6228), 1349-1352